Europäisches Patentamt

(19) European Patent Office

Office européen des brevets

(11) Publication number: **0 269 081 B1**

# EUROPEAN PATENT SPECIFICATION

(45) Date of publication of patent specification: **27.03.91**   (51) Int. Cl.⁵: **B60R 1/06**

(21) Application number: **87117360.5**

(22) Date of filing: **25.11.87**

(54) **Supporting device of a mirror element for a rearview mirror.**

(30) Priority: **26.11.86 JP 180488/86**

(43) Date of publication of application:
**01.06.88 Bulletin 88/22**

(45) Publication of the grant of the patent:
**27.03.91 Bulletin 91/13**

(84) Designated Contracting States:
**DE FR GB**

(56) References cited:
**EP-A- 0 170 296**
**EP-A- 0 203 456**
**DE-A- 3 148 525**

(73) Proprietor: **MURAKAMI KAIMEIDO CO., LTD**
**12-25, Miyamoto-cho Shizuoka-shi**
**Shizuoka 422(JP)**

(72) Inventor: **Kikuchi, Toshiaki**
**1-16, Kitayabe-cho 2-chome**
**Shimizu-shi Shizuoka-ken, 424(JP)**
Inventor: **Mochizuki, Toshihiro**
**13-3, Asahigaoka**
**Fujieda-shi Shizuoka-ken, 426(JP)**
Inventor: **Ito, Yasutoshi**
**1-17, Midori-cho, Shizuoka-shi**
**Shizuoka-ken 420(JP)**

(74) Representative: **Riederer Freiherr von Paar zu**
**Schönau, Anton et al**
**Van der Werth, Lederer & Riederer Freyung**
**615 Postfach 2664**
**W-8300 Landshut(DE)**

## Description

Field of the Invention

This invention relates to a rearview mirror for a motor vehicle. Particularly, the invention relates to a structure for supporting a mirror element to the central pivot of an actuator unit for automatically adjusting the tilting angle of the mirror as specified in the preamble of claim 1 and as disclosed, for example, in EP-A- 0170296.

Description of the Prior Art

A rearview mirror mounted outside a motor vehicle for adjusting the angle of reflection of the mirror from the interior of a compartment has been known. An actuator unit fixed to a mirror body has two electric motors for adjusting the angle of reflection of the mirror at both vertical and horizontal angles, and a drive transmission. Supporting means for tiltably supporting a mirror element is provided at the center in the rear housing of the actuator unit. The supporting means has two movable pivots at positions disposed at predetermined distances in directions crossing at a right angle at the supporting means which is the center or vertex of the angle. When the electric motor is driven, either one or both of the movable pivots is axially moved back and forth through the drive transmission to tilt the mirror element about the supporting means as a center.

An ordinary supporting means has a semispherical socket provided in the rear housing of the actuator, a pherical pivot formed on the back surface of a mirror holder forming a mirror element so that the spherical socket is engaged with the spherical pivot. This supporting means does not have sufficient pivot holding force, and a chatter occurs at the mirror surface while the vehicle is travelling. It has been considered to increase the diameters of the pivot and the socket to strengthen the holding force so as to prevent the chatter from occuring at the mirror, but thereby the distance between the actuator and the mirror ele..ent is lengthened and the structure becomes unstable; further, the mirror body is unnecessarily and unpreferably increased in size. Thus, a system having a spherical segment-shaped pivot provided on the back surface of the mirror holder and engaged with a socket including a zone-of-sphere-shaped recess formed in the rear housing of the actuator unit has been proposed by Japanese Utility Model Publication No. 37857/1985. The pivot and the socket of this device have larger diameters than those of the conventional s[herical pivot and the recess spherical socket and a low height of the spherical segment so that the distance between the actuator unit and the mirror element is not so increased. The system is advantageous in that the recess is formed at the center of the spherical segment-shaped pivot, a spherical segment-shaped cap is engaged with the recess, a screw is penetrated through a helical spring with the recess, clamped to the center of the socket having the zone-of-sphere-shaped recess, and a desired engaging torque can be held by controlling the clamping force. However, in this system, a threaded cylinder in integrally formed at the center of the zone-of-sphere-shaped recess of the rear housing and the threaded cylinder is not engaged with a front housing. Therefore, its rigidity is less, and this system does not have a structure for preventing a chatter from occuring at a mirror. Since a screw must be penetrated through the center of the spherical segment-shaped pivot from the surface or the mirror holder, clamped to the socket of the actuator side to be associated, and a mirror glass must be then bonded to the surface of the mirror holder, associating procedure becomes complicated.

Summary of the Invention

It is therefore an object of this invention to provide a supporting device of a mirror element for a rearview mirror having sufficient mirror element holding strength.

According to a particular aspect of the invention, it is to provide a supporting device of a mirror element for a rearview mirror in which the rigidity of an actuator housing of the mirror element supporting portion is enhanced to prevent the mirror element from vibrating.

In order to achieve the objects of the invention and to overcome the problems of the prior art, the supporting device of a mirror element for rearview mirror of the invention includes, according to the characterising portion of claim 1, a cylinder of height arriving at the inner wall of a rear housing from the inner wall of a front housing of an actuator unit, a threaded cylinder protruded to the upper surface of the cylinder, a zone-of-sphere- shaped socket formed on the periphery of the threaded cylinder, and a spherical segment-shaped pivot provided at the mirror element side. A recess is formed at the center of the spherical segment-shaped pivot, a trapezoidal spherical cap is engaged with the recess, and a tapping screw is penetrated through the center of the threaded cylinder via a helical spring to be clamped.

A desired engaging torque is provided by adjusting the clamping force to provide sufficient mirror holding strength. The threaded cylinder is formed at the center of the upper surface of the cylinder projected integrally from the inner wall of the front housing, and the shoulder formed at the cylindrical upper edge of the root of the threaded cylinder is contacted with the inner wall of the rear housing. Thus, the front housing and the rear housing are closely contacted at the mirror element supporting portion by clamping the screw to maintain a high rigidity. A relatively large aperture is formed at the center of the mirror holder at the mirror element, and a pivot plate with the spherical segment-shaped pivot can be detachably engaged with the aperture. The surface of the mirror holder is firmly secured with the mirror glass. When assembling the rearview mirror, an intermediate assembly in which a desired engaging torque is adjusted by adjusting the clamping of the tapping screw while associating in advance the pivot plate with the actuator unit is contructed. The intermediate assembly thus adjusted is mounted directly on the mirror body or in a frame in the mirror body, the mirror element is secured to the vicinity of the aperture of the mirror element at the pivot plate of the actuator side, or removably engaged or connected. In case that the mirror element is engaged, when the mirror plate might be damaged or scratched during use, only the mirror element is removed, a mirror element of the same type prepared separately is mounted or engaged with the pivot plate as described above to recover the rearview mirror similarly a new one.

Brief Description of the Drawings

A preferred embodiment of the invention is set forth in the following description and shown in the drawings and the invention is particularly and distinctly pointed out and set forth in the appended claims.

Fig. 1    is a sectional view of a rearview mirror according to a preferred embodiment of the present invention;

Fig. 2    is an enlarged sectional view of a mirror element supporting means; and

Fig. 3    is an exploded assembling view of an essential portion of the supporting device.

Description of the Preferred Embodiment

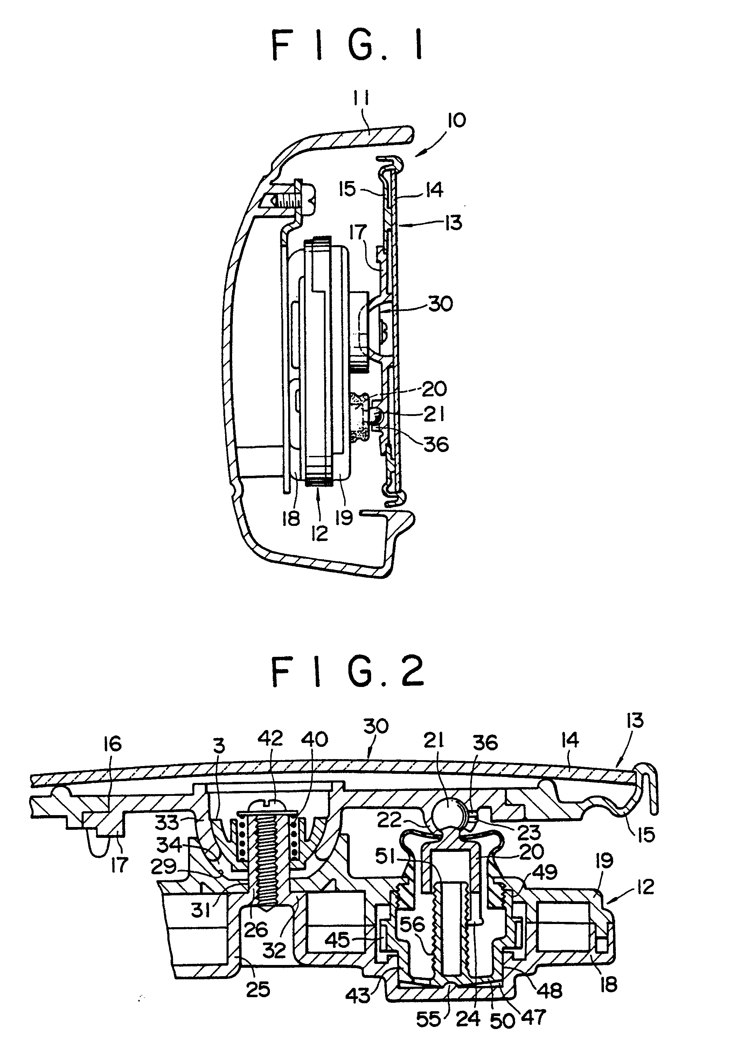

A remote controlled electric motor operated mirror assembly 10 is shown in Figs. 1 and 2, embodying the present invention.

The assembly 10 includes a mirror housing or body 11 rotatably mounted on a base, an actuator unit 12 set in said mirror body 11, and a mirror element 13 mounted with an adjustable tilting angle in front of the actuator unit 12. Said mirror element 13 has a mirror plate 14 and a mirror holder 15 for holding the mirror plate 14. An opening 16 is opened at the center of the mirror holder 15, and a pivot plate 17 is detachably mounted therein.

The actuator unit 12 is constructed, as shown in Fig. 2, to separably engage a front housing 18 and a rear housing 19, and has therein two sets of an electric motor, a worm for forming a drive transmission, and a worm wheel 45. At the center of the rear housing 19 is provided a double socket-type supporting means 30 to be described later to tiltably support the mirror element 14. The worm wheels 45 of the drive transmissions are disposed in the housing at positions separated by a distance at a right angle with the supporting means 30 as center or vertex. An adjusting nut 20 is attached to each worm wheel 45, and a pivot 21 provided at the end of the adjusting nut 20 is engaged with a spherical seat 22 formed on the back surface of the pivot plate 17. When any of the electric motors is normally or reversely rotated, the adjusting nut 20 moves back and forth through the drive transmission, and the angle of reflection of the mirror is adjusted at vertical or horizontal angle.

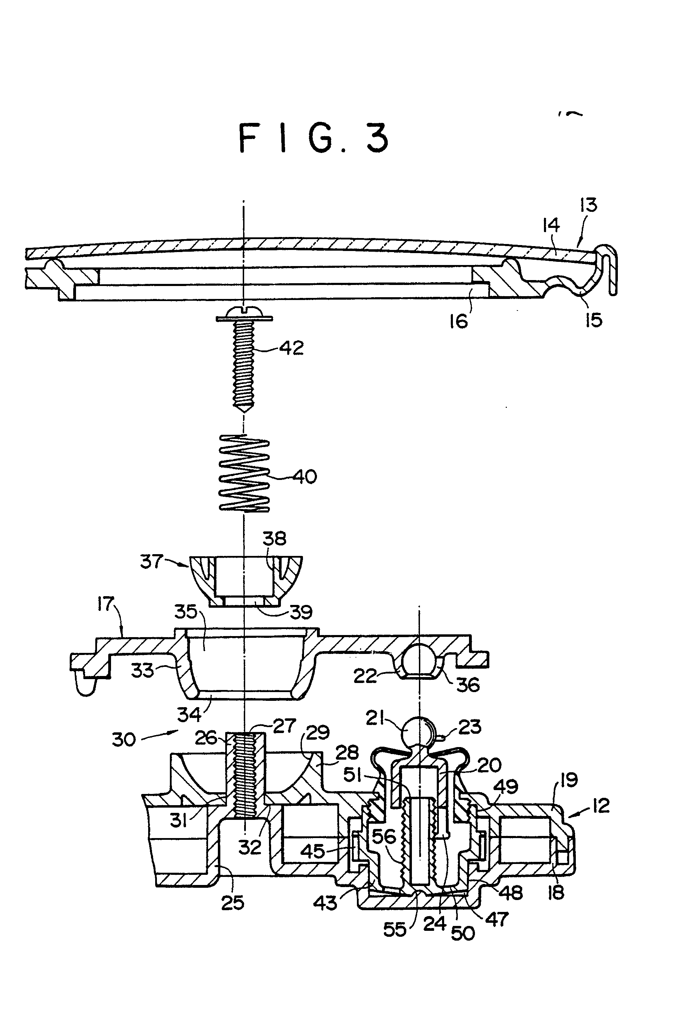

The supporting means 30 will be described in detail. As shown in Figs. 2 and 3, a cylinder 25 has the height from the front housing 18 to the inner surface of the rear housing 19 for forming the actuator unit 12. The supporting means 30 includes a threaded cylinder 26 which is a coaxial extension of cylinder 25 and protrudes longer than the thickness of the housing from the front housing 18, and further includes a double ball and socket structure at the periphery of the threaded cylinder 26, this structure comprising a socket or bearing seat 28 formed on the rear housing 19.

The thread cylinder 26 contains an inner threaded 27, and is penetrated via a through-hole 31 of the bearing seat 28 around the center of the cylinder 25. The bearing seat 28 has a recess spherical surface 29 for forming a zone-of-sphere-shaped recess for receiving a hollow pivot 33 of the side of the pivot plate 17, and the lower surface of the bearing seat 28 is contacted with a shoulder 32 of the cylinder 25 from which shoulder the threaded cylinder 26 protrudes, penetrating through the through-hole 31 from the center of the recess spherical surface 29 upward. The hollow spherical segment-shaped pivot 33 is formed at the center of the pivot plate 17 and has a through-hole 34 at its apex, and a recess spherical inside surface 35. The pivots 21 of the adjusting nuts 20 are engaged in the respective spherical bearing seats 22 as described above so that the center of the pivot 33 forms the right angle center.

A spherical segment-shaped cap 37 is engaged with the recess spherical surface 35 of the pivot 33. This cap 37 includes a hollow portion 38 for containing a helical spring 40 and a through-hole 39 for inserting a tapping screw 42 at the bottom of the hollow portion 38, the tapping screw by a washer pressing on the spring 40, and the pivot 33 is fixed to the threaded cylinder 26 protruded from the side of the mirror holder by the helical spring 40 and the tapping screw 42 with the washer in the hollow portion 38. Thus, the mirror element 13 is clamped by a suitable torque to the recess spherical surface 29 of the actuator unit by the hollow spherical pivot 33, due to the tension of the spring 40 and the slamping force of the screw 42, and the lower surface of the bearing seat 28 is pressed in contact with the shoulder 32 formed on the front housing 18. Therefore, the rigidity of the mirror element support is increased.

Then, the drive transmissions will be described in detail. The drive transmissions for adjusting the angle of the mirror at vertical and horizontal angles are disposed in the actuator unit at positions separated by a right angle the center of which is the central supporting means 30 as described above. Each drive transmission has a worm (not shown) fixed to the output shaft of the electric motor, and a cylindrical member 43 carrying the worm wheel 45.

Since the drive transmissions have the same structures for adjusting the mirror at both vertical and horizontal angles, the transmission for adjusting the mirror at the vertical angle only will be described.

As shown in Fig. 2, the cylindrical member 43 is disposed between the inner wall 48 of a recess 47 formed on the front housing 18 of the actuator unit 12 and an annular wall 49 of the side of the rear housing 19. The cylindrical member 43 is formed slightly smaller than the height of the thicknesswise direction of the housing having the recess 47 and the diameters of the inner wall 48 and the annular wall 49, and is rotatably supported between the opposed front and rear housings 18 and 19 in a state that a slight play is provided.

The cylindrical member 43 is formed with the worm wheel 45 for engaging the worm at the outer periphery thereof, and with a pivot screw 51 extended from the center of a bottom plate 50 upward. The worm wheel 45 and the pivot screw 51 are disposed on the same axis. The bottom plate 50 is formed as a conical unit having large vertex angle, a semispherical recess is formed at the vertex portion to be engaged with a semispherical projection 55 formed at the center of the recess 47 of the front housing 18. The screw 51 is tiltably adjusted at the engaged pivot position as a fulcrum at the time of adjusting the angle of the mirror. The body of the cylindrical member 43, the bottom plate 50 and the pivot screw 51 of the cylindrical member are integrally molded of a polyacetal resin or the like.

The above-mentioned adjusting nut 20 is engaged with the threaded portion 56 of the pivot screw 51. A plurality of catchers 24 are formed on the adjusting nut 20, and the catchers 24 are engaged with the threaded portion 56 of the pivot screw. The upper end of the adjusting nut 20 has the pivot 21 engaged with the socket or spherical seat 22 of the pivot plate 17 as described above. This pivot 21 has an anti-rotation projection 23 projected slightly sidewise and engaged with a slit 36 of the side of the spherical seat 22. Since the adjusting nut 20 is engaged in the anti-rotation state with the pivot plate 17, when the worm wheel 45 is rotated by the drive of the worm upon normal or reverse rotation of the reversible motor, the adjusting nut 20 moves back and forth of the mirror, thereby adjusting the angle of reflection of the mirror.

In the operation of the supporting device of the mirror element of the invention, it is first selected which one of vertical and horizontal angles of the mirror is altered, and a switch (not shown) is operated in response to the selection. For example, the case will be described that the vertical angle of the mirror is adjusted. When the electric motor is rotated normally or reversely by the operation of the switch, the body of the cylindrical member 43 integral with the worm wheel 45 and the pivot screw 56 are rotated by the rotation of the worm wheel 45 engaged with the worm of the motor output shaft end.

The adjusting nut 20 engaged with the pivot screw 51 in the anti-rotation state is moved back and forth in the axial direction (in the horizontal direction of the mirror) by the rotation of the pivot screw 51. When the adjusting nut 20 moves back and forth, the mirror element 13 held at a suitable clamping torque by the supporting means 30 is tilted around the supporting means 30 as center to adjust the vertical angle of reflection of the mirror. In case of adjusting the horizontal angle of the mirror, the respective electric motor is driven, and the respective adjusting nut 20 is moved back and forth. It is noted that the structures of the adjusting nut and the pivot screw in the above-mentioned supporting device of the mirror element are not limited to the embodiment shown in the drawings.

## Claims

1. A supporting device of a mirror element (13) for a rearview mirror (10) comprising:
   - a mirror body (11) supported to a base;
   - a mirror element (13) with a reflecting surface;

- an actuator unit (12) fixed to said mirror body (11) and comprising a housing formed by engaging a front housing (18) with a rear housing (19) with a spherical bearing seat (28) formed thereon; and
- supporting means (30) formed at said actuator unit (12) for tiltably supporting said mirror element (13);

characterized in that said supporting means (30) comprises a cylinder (25) formed with a height that it arrives at the inner wall of said rear housing (19) from the inner wall of said front housing (18), a threaded cylinder (26) integrally standing on the upper surface of said cylinder (25) and passing through said bearing seat (28), a spherical segment-shaped pivot (33) provided at said mirror element (13) received also in said bearing seat (28), a cap (37) being elastically inserted in said pivot (33), and a mounting member including a tapping screw (42) and a helical spring (40), whereby said threaded cylinder (26) is inserted into the pivot (33) of said mirror element (13) and the cap (37), the tapping screw (42) being engaged from the top of the threaded cylinder (26).

2. The supporting device as claimed in claim 1, wherein the upper surface (32) of said cylinder (25) formed at the front housing (18) is contacted with the lower surface of a recess spherical seat (28) formed on the rear housing (19).

3. The supporting device as claimed in claim 1 or 2, characterized in that the threaded cylinder (26) protrudes from the upper surface of the cylinder (25), a zone-of-sphere-shaped socket (28) is formed around the periphery of the threaded cylinder (26), a recess (34) is formed at the center of the spherical segment-shaped pivot (33), the cap (37) engaged in said recess is a trapezoidal spherical cap, and the tapping screw (42) is penetrated through the center of the threaded cylinder (26) via the helical spring (40) to be clamped.

4. The supporting device as claimed in any of claims 1 to 3, characterized in that the mirror element supporting means (30) are formed at the center of said rear housing (19) of said actuator unit, two drive transmissions are disposed in the housing at positions separated at a right angle with respect to said mirror element supporting means as a center, two electric motors drive said drive transmissions, and adjusting nuts (20) are mounted for back and forth movement at the centers of said said drive transmissions.

5. The supporting device as claimed in any of claims 1 to 4, wherein said mirror element (13) comprises a mirror plate (14), a mirror holder (15) for supporting the mirror plate, and a pivot plate (17) engaged with the center of said mirror holder (15), characterized in that said pivot plate (17) has the hollow spherical segment-shaped pivot (33) engaged with the supporting means (30) at the center thereof, and a pair of sockets (22) for engaging the ends of adjusting nuts (20) protruded from the side of the actuator unit (12) at positions separated by a right angle with the pivot (33) as a center.

## Revendications

1. Dispositif de support pour un élément miroir (13) d'un rétroviseur (10), comprenant:
   - un corps de miroir (11) supporté par un socle;
   - un élément miroir (13) avec une surface réfléchissante;
   - un ensemble d'actionnement (12) fixé audit corps de miroir (11) et comprenant une boîte formée par assemblage d'un boîtier avant (18) et d'un boîtier arrière (19) sur lequel est formé un siège de palier sphérique (28); et
   - des moyens de support (30) formés sur ledit ensemble d'actionnement (12) pour supporter de façon inclinable ledit élément miroir (13);

   caractérisé en ce que lesdits moyens de support (30) comprennent un cylindre (25) ayant une hauteur telle qu'à partir de la paroi interne dudit boîtier avant (18), il atteigne la paroi interne dudit boîtier arrière (19), un cylindre fileté (26) qui se dresse d'un seul tenant sur la surface supérieure dudit cylindre (25) et qui passe à travers ledit siège de palier (28), un pivot en forme de zone sphérique (33) prévu sur ledit élément miroir (13) et reçu dans ledit siège de palier (28), une calotte (37) étant insérée élastiquement dans ledit pivot (33), et un organe de montage comprenant une vis autotaraudeuse (42) et un ressort hélicoïdal (40), ledit cylindre fileté (26) étant inséré dans le pivot (33) dudit élément miroir (13) et dans la calotte (37), la vis autotaraudeuse (42) étant vissée par le haut du cylindre taraudé (26).

2. Dispositif de support selon la revendication 1, dans lequel la surface supérieure (32) dudit cylindre (25) formé sur le boîtier avant (l8) est en contact avec la surface inférieure d'un siège sphérique en creux (28) forme sur le boîtier arrière (19).

3. Dispositif de support selon la revendication 1 ou 2, caractérisé en ce que le cylindre fileté (26) fait saillie sur la surface supérieure du cylindre (25), un logement en forme de zone sphérique (28) est formé autour de la périphérie du cylindre fileté (26), une cavité (34) est formée au centre du pivot en forme de zone sphérique (33), la calotte (37) insérée dans cette cavité est une calotte sphérique trapezoïdale, et la vis autotaraudeuse (42) est insérée au centre du cylindre fileté (26) en passant à travers le ressort hélicoïdal (40) pour serrer celui-ci.

4. Dispositif de support selon l'une quelconque des revendications 1 à 3, caractérisé en ce que les moyens de sunport (30) de l'élément miroir sont formés au centre du boîtier arrière (19) dudit ensemble d'actionnement, deux transmissions d'entraînement sont disposées dans la boîte en des points espacés angulairement d'un angle droit par rapport auxdits moyens de support de l'élément miroir pris comme centre, deux moteurs électriques entraînent lesdites transmissions d'entraînement, et des écrous d'ajustement (20) sont montés de façon à effectuer un mouvement de va-et-vient aux centres desdites transmissions d'entraînement.

5. Dispositif de support selon l'une quelconque des revendications 1 à 4, dans lequel ledit élément miroir (13) comprend une plaque de verre à glace (14), un porte-miroir (15) pour supporter la plaque de verre à glace et une plaque de pivot (17) assemblée au centre dudit porte-miroir, caractérisé en ce que ladite plaque de pivot (17) comporte en son centre le pivot creux (33) en forme de zone sphérique qui est en prise avec les moyens de support (30) et, en des points espaces angulairement d'un angle droit en prenant le pivot (33) comme centre, une paire de logements (22) destines à être accouplés aux extrémités des écrous d'ajustement (20) qui font saillie sur le côté de l'ensemole d'actionnement (12).

**Ansprüche**

1. Trägervorrichtung eines Spiegelements (13) für einen Rückblickspiegel (10), mit:
   - einem von einer Basis getragenen Spiegelkörper (11);
   - einem Spiegelelement (13) mit einer reflektierenden Oberfläche;
   - einer Betätigungseinheit (12), die am Spiegelkörper (11) befestigt ist und ein Gehäuse umfaßt, das durch den Angriff eines Vordergehäuses (18) an einem Rückgehäuse (19) mit einem darauf gebildeten sphärischen Lagersitz (28) gebildet ist; und
   - einer Trageinrichtung (30), die an der Betätigungseinheit (12) zum kippbaren Tragen des Spiegelelements (13) gebildet ist;
   
   dadurch gekennzeichnet, daß die Trageinrichtung (30) folgende Teile umfaßt: einen Zylinder (25), der so hoch ist, daß er von der Innenwand des Vordergehäuses (18) bis zur Innenwand des Rückgehäuses (19) reicht, und daß auf der oberen Fläche dieses Zylinders (25) integral ein mit Gewinde versehener Zylinder (26) steht, der durch den Lagersitz (28) hindurchtritt; eine Lagerschale (33) in Form eines Kugelsegments, die am Spiegelment (13) gebildet ist und ebenfalls im Lagersitz (28) aufgenommen ist; eine Kappe (37), die elastisch in die Lagerschale (33) eingesetzt ist; und ein Montageglied einschließlich einer Gewindeschraube (42) und einer Schraubenfeder (40); wobei der mit Gewinde versehene Zylinder (26) in die Lagerschale (33) des Spiegelelements (13) und die Kappe (37) eingeführt ist und die Gewindeschraube (42) von der Oberseite des mit Gewinde versehenen Zylinders (26) her eingeschraubt ist.

2. Trägervorrichtung nach Anspruch 1, bei der die obere Fläche (32) des am Vordergehäuse (18) gebildeten Zylinders (25) in Berührung mit der unteren Fläche eines mit einer Ausnehmung versehenen sphärischen Sitzes (28), der am Rückgehäuse (19) gebildet ist, steht.

3. Trägervorrichtung nach Anspruch 1 oder 2, dadurch gekennzeichnet, daß der mit Gewinde versehene Zylinder (26) von der oberen Fläche des Zylinders (25) vorsteht, daß eine Fassung (28) in Form einer Kugelzone um den Umfang des mit Gewinde versehenen Zylinders (26) gebildet ist, daß eine Ausnehmung (34) im Zentrum der kugelsegmentförmigen Lagerschale (33) gebildet ist, daß die in der Ausnehmung aufgenommene Kappe (37) eine trapezoidale sphärische Kappe ist, und daß die Gewindeschraube (42) durch das Zentrum des mit Gewinde versehenen Zylinders (26) und durch die Schraubenfeder (40), die sie festklammern soll, hindurchtritt.

4. Trägervorrichtung nach einem der Ansprüche 1 bis 3, dadurch gekennzeichnet, daß die Trageinrichtung (30) des Spiegelelements im Zentrum des Rückgehäuses (19) der Betätigungseinheit gebildet ist, daß zwei Antriebstransmissionen im Gehäuse an Stellen angeordnet sind, die unter einem rechten Winkel in Bezug zur Trageinrichtung des Spiegelements als Zentrum angeordnet sind, daß zwei Elektromotoren die Antriebstransmissionen antreiben und daß Justiermuttern (20) für eine Rückwärts- und Vorwärtbewegung an den Zentren der Antriebstransmissionen montiert sind.

5. Trägervorrichtung nach einem der Ansprüche 1 bis 4, wobei das Spiegelement (13) eine Spiegelplatte (14), einen Spiegelhalter (15) zum Tragen der Spiegelplatte und eine Lagerplatte (17), die am Zentrum des Spiegelhalters (15) angreift, umfaßt, dadurch gekennzeichnet, daß die Lagerplatte (17) mit der hohlen kugelsegmentförmigen Lagerschale (33) an der Trägereinrichtung (30) in ihrem Zentrum angreift und weiterhin zwei Fassungen (22) zum Angreifen an den Enden der Justiermuttern (20) aufweist, die von der Seite der Betätigungseinheit (12) an Stellen vorstehen, die gegeneinander um einen rechten Winkel mit der Lagerschale (33) als Zentrum beabstandet sind.

# F I G. I

# F I G. 2

# F I G. 3